# DEMANDE DE BREVET EUROPEEN

(11) **EP 0 965 534 A1**
(43) Date de publication de la demande: **22.12.1999**
(21) Numéro de dépôt: 99114908.9
(22) Date de dépôt: 23.11.1994
(51) Int. Cl.: B65D 47/20, B65D 83/16, B65D 83/14, B29C 45/14

(54) **Ensemble de distribution équipé d'un système de fermeture**

(62) Demande divisionnaire de: 94402678.0
(71) Demandeur: L'OREAL, 75008 Paris (FR)
(72) Inventeur: De Laforcade, Vincent, 92140 Clamart (FR)
(74) Mandataire: Boulard, Denis

(57) **Abrégé**

Ensemble de distribution (1) comportant un récipient (1A) muni d'un organe de distribution, et une tête de distribution (2) contenant au moins un canal (3) de distribution du produit à distribuer, un système de fermeture étant prévu pour fermer la partie terminale, s'ouvrant sur l'extérieur, du canal de distribution (3), ledit système de fermeture étant formé par un obturateur (5A) qui fait partie d'une pièce en matériau élastiquement déformable (5, 105) et par au moins un siège (15), l'obturateur (5A) étant en contact avec son siège (18) associé lorsqu'il n'y a pas de distribution, s'écartant dudit siège par déformation élastique sous la poussée du produit à distribuer et revenant par élasticité en contact avec ledit siège (18) lorsque cesse la distribution, l'obturateur étant constitué par une lèvre élastique (5A) s'écartant du siège (18) par flexion perpendiculairement à la direction de poussée du produit en réponse à l'actionnement dudit organe de distribution, le siège faisant partie d'un élément en matériau rigide (10), la pièce en matériau élastique (5) étant obtenue par un surmoulage au moins partiel de l'élément en matériau rigide (10), le matériau élastique et le matériau rigide étant chimiquement incompatibles pour éviter des liaisons chimiques entre les deux matériaux lors de l'opération de surmoulage, caractérisé en ce que la tête de distribution est conformée en un bouton-poussoir, apte à actionner ledit organe de distribution.

## Description

La présente invention concerne un ensemble de distribution équipé d'un système de fermeture.

Plus particulièrement, la présente invention concerne un ensemble de distribution comportant un récipient muni d'un organe de distribution, et une tête de distribution contenant au moins un canal de distribution du produit à distribuer, un système de fermeture étant prévu pour fermer la partie terminale, s'ouvrant sur l'extérieur, du canal de distribution, ledit système de fermeture étant formé par un obturateur qui fait partie d'une pièce en matériau élastiquement déformable et par au moins un siège, l'obturateur étant en contact avec son siège associé lorsqu'il n'y a pas de distribution, s'écartant dudit siège par déformation élastique sous la poussée du produit à distribuer et revenant par élasticité en contact avec ledit siège lorsque cesse la distribution, l'obturateur étant constitué par une lèvre élastique s'écartant du siège par flexion autour d'un axe perpendiculaire à la direction de poussée du produit, en réponse à l'actionnement de l'organe de distribution.

Un tel ensemble de distribution, tel que celui qui est décrit, par exemple, dans le brevet français FR-A-1 573 165, permet une protection maximale du produit qu'il renferme contre les agressions extérieures : sable, poussière, eau, ou contre les réactions d'oxydation provoquées par les agents chimiques externes, en particulier par l'oxygène de l'air.

On connaît, par ailleurs, par le document DE-U-93 07083 un ensemble de distribution comportant une tête de distribution pourvue d'un corps rigide et d'un système de fermeture élastique, apte à fermer, en position de repos, un réservoir de produit, et s'ouvrir en position de distribution sous la poussée du produit. Bien que la tête de distribution et le système de fermeture puissent former une seule pièce, par exemple par bi-injection, celle tête de distribution présente l'inconvénient de nécessiter, après moulage de la partie rigide, son transfert dans un second moule pour le moulage du système de fermeture élastique, ce qui est compliqué à réaliser et ce qui grève donc le prix de revient de cette tête de distribution.

La présente invention a pour but de réaliser un tel ensemble dont le prix de revient est inférieur à celui des ensembles connus jusqu'ici et qui, en outre, fonctionne avec une grande fiabilité.

Ainsi, selon l'invention, un ensemble de distribution du genre ci-dessus comporte un élément en matériau rigide dont fait partie le siège, la pièce en matériau élastique étant obtenue par un surmoulage au moins partiel de l'élément en matériau rigide, le matériau élastique et le matériau rigide étant chimiquement incompatibles pour éviter des liaisons chimiques entre les deux matériaux lors de l'opération de surmoulage.

La pièce élastique et l'élément rigide constituent, ainsi, un embout de fermeture recouvrant, de façon étanche, la partie terminale, s'ouvrant sur l'extérieur, du canal de distribution.

L'ensemble, selon l'invention se caractérise en ce que la tête de distribution est conformée en un bouton-poussoir, apte à actionner ledit organe de distribution. Avantageusement, l'organe de distribution est constitué d'une valve de distribution ou d'une pompe manuelle.

Selon l'invention, l'élément rigide peut comporter un organe d'accrochage surmoulé, au moins partiellement, par la pièce élastique.

Selon un premier mode de réalisation, l'élément d'accrochage comporte un picot surmoulé, au moins partiellement, par la pièce élastique ; l'élément rigide est en forme de doigt de gant et son fond présente un passage dont le volume est occupé par le matériau élastique réalisant ainsi, dans le passage, une lèvre élastique qui coopère avec un siège constitué par un bord du passage.

Avantageusement, l'élément rigide est cylindrique, à section circulaire, et son fond est de forme ogivale se terminant selon une partie plane, le passage étant ménagé dans la partie plane ; le passage est de forme générale rectangulaire et placé au voisinage de l'axe de l'élément rigide.

De préférence, le fond de l'élément rigide présente une ouverture dont le volume est occupé par le matériau élastique réalisant ainsi, dans l'ouverture, un pion d'ancrage pour la pièce élastique ; l'ouverture est, de préférence circulaire et de préférence placée au dessus de l'axe de l'élément rigide, dans la partie plane ; le siège est constitué par le bord du passage le plus éloigné de l'ouverture.

Avantageusement, la partie plane de l'élément rigide est inclinée sur l'axe de l'élément rigide ; le canal de distribution est ménagé dans une sortie tubulaire qui est emmanchée dans l'embout de fermeture.

De préférence, le canal de distribution est ménagé dans une sortie tubulaire comportant une gorge annulaire, entourant le canal et dans laquelle est inséré l'embout.

Selon un autre mode de réalisation l'élément d'accrochage présente un passage dont le volume est occupé par le matériau élastique réalisant ainsi, dans le passage, une lèvre élastique qui coopère avec un siège constitué par un bord rigide du passage.

Avantageusement, la matière formant la pièce en matériau élastique a une dureté comprise dans la gamme allant de 40 Shore A à 50 Shore D et de préférence de 50 Shore A à 90 Shore A.

Ce matériau élastique est choisi, avantageusement, parmi les polyéthylènes de basse densité, l'éthylène vinyl acétate, les polychlorures de vinyle, les terpolymères de bloc de polypropylène avec des motifs styrène/éthylène - butène/styrène, et les polyuréthanes thermoplastiques.

L'élément en matériau rigide, est, de préférence, moulé en un matériau choisi parmi les polyéthylènes de haute densité et les polypropylènes.

Selon l'invention, on peut surinjecter, par exemple, la pièce élastique en polyéthylène de basse densité sur un siège rigide en polypropylène, ou surinjecter de l'éthylène vinyl acétate sur du polypropylène ou sur du polyéthylène de haute densité. D'autres couples de matériaux élastiques rigides sont constitués par les combinaisons : polychlorure de vinyle - polypropylène ou polyéthylène de haute densité ; terpolymère de bloc de polypropylène/styrène éthylène/butène styrène - polypropylène ou polyéthylène de haute densité ou bien polyuréthane thermoplastique - polypropylène ou polyéthylène de haute densité.

Pour mieux faire comprendre l'objet de l'invention, on va en décrire, maintenant, à titre d'exemple purement illustratif et non limitatif, plusieurs modes de réalisation représentés sur les dessins annexés.

Sur ces dessins :
- la figure 1 représente partiellement un ensemble de distribution selon l'invention, équipé de l'embout de fermeture, montré en coupe ;
- les figures 2 à 4 montrent schématiquement les opérations de moulage conduisant à l'embout de fermeture ;
- la figure 5 est analogue à la figure 1 et concerne une variante de l'ensemble de distribution représenté à la figure 1 ;
- la figure 6 est une coupe partielle d'une variante d'embout de fermeture ;
- la figure 7 représente, en coupe, l'élément rigide seul de l'embout de la figure 1 ;
- la figure 8 est une vue de dessous en élévation de l'élément rigide de la figure 7 ;
- la figure 9 est une vue analogue à la figure 7 mais représentant l'embout complet ;
- la figure 10 est une vue de gauche de la figure 9 ;
- la figure 11 est une vue de droite de la figure 9.

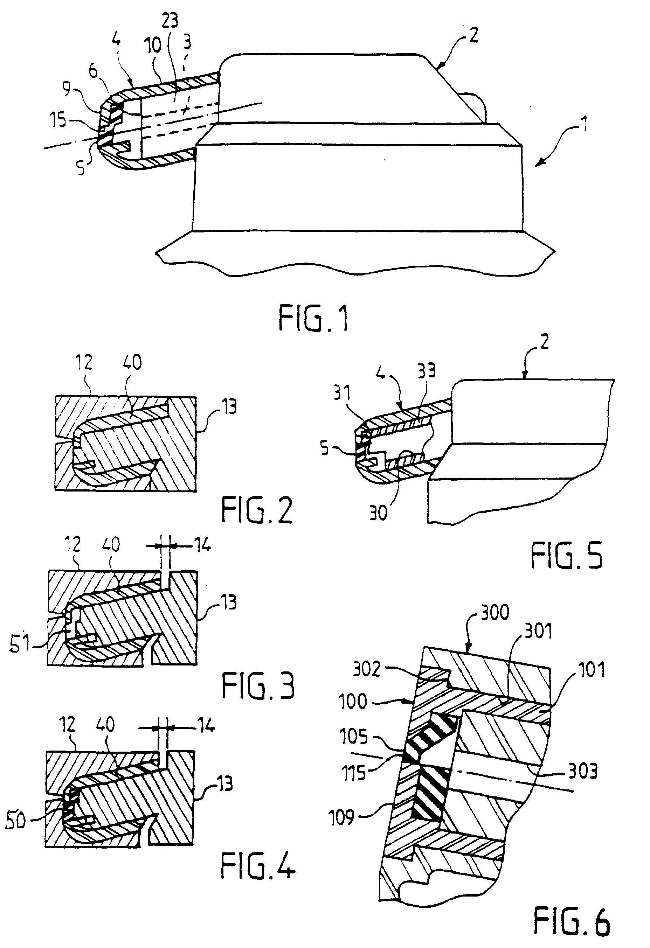

L'ensemble de distribution 1, représenté partiellement sur la figure 1, comporte un récipient contenant le produit à distribuer. C'est par exemple un ensemble de distribution dans lequel le produit est soumis dans le récipient à la pression d'un fluide propulseur, une valve de distribution retenant le produit à l'intérieur du récipient ; une tête de distribution comprend un bouton-poussoir 2 muni d'un canal 3 de distribution conduisant vers l'orifice de distribution ; une action sur le bouton-poussoir 2 ouvre la valve de distribution et le produit est alors distribué à travers le canal 3 ; lorsque l'on cesse l'action sur le bouton-poussoir, la valve de distribution, soumise à l'action d'un ressort de rappel, se referme. On comprendra que, comme la fermeture est située au niveau de la valve, le produit contenu entre la sortie de la valve et la sortie du canal 3 de distribution, qui n'est plus soumis à la pression interne du récipient, est arrêté immédiatement dans sa progression et un volume latent de produit est ainsi constitué ; si ce volume est en contact direct avec l'air ambiant et les diverses particules qu'il contient, ce volume de produit se dégraderait.

Un système de fermeture à obturateur associé à un siège est prévu pour fermer le canal 3 ; le système de fermeture est porté par un embout 4 de fermeture qui recouvre, de façon étanche, la partie terminale s'ouvrant sur l'extérieur du canal 3.

L'embout 4 est constitué d'un élément 10 en un matériau thermoplastique rigide, comme le polypropylène ou le polyéthylène, et d'une pièce 5 en un matériau flexible, comme un thermoplastique ou un élastomère dont la dureté Shore A est de l'ordre de 40 à 80, c'est-à-dire nettement inférieure à celle de l'élément rigide 10.

L'élément rigide 10 est en forme de doigt de gant, cylindrique, à section circulaire ; le diamètre intérieur de l'élément rigide 10 est tel qu'il peut être monté serré, de façon étanche, sur la sortie tubulaire 23 portée par le bouton-poussoir 2 et dans laquelle est ménagé le canal 3 de distribution ; bien entendu, le montage par serrage de l'élément rigide 10 sur la sortie tubulaire 23 peut être complété ou remplacé par un montage par claquage, encliquetage ou autre.

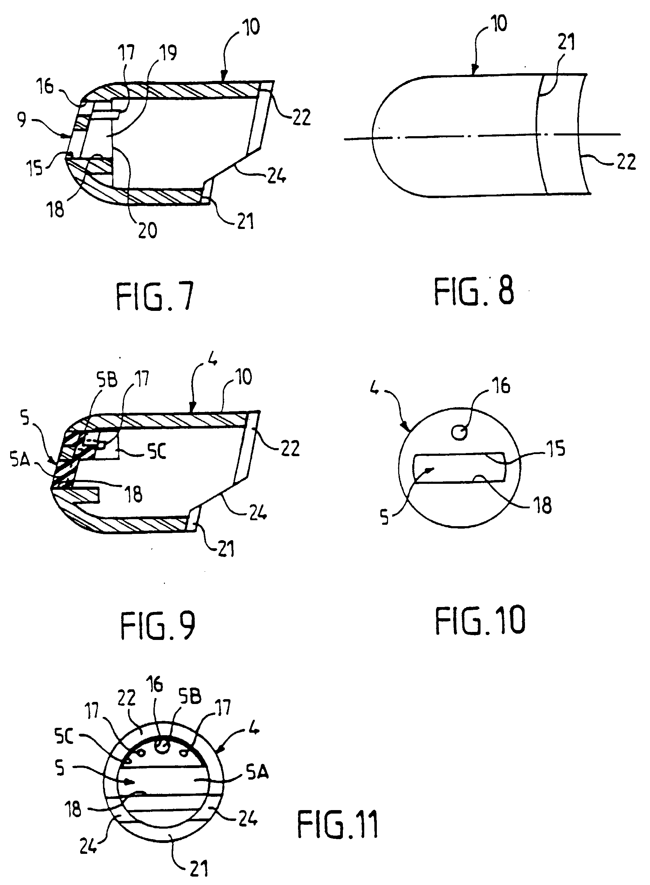

Plus précisément, comme cela est visible sur les figures 7 et 11, l'élément rigide 10 présente un fond de forme générale ogivale se terminant selon une partie plane 9 inclinée sur l'axe de l'élément rigide 10 ; la partie plane 9 du fond de l'élément 10 est munie d'une ouverture circulaire 16, centrée dans le plan de symétrie de l'élément 10 passant par son axe et au dessus de cet axe ; la partie plane 9 est munie également d'un passage 15, de forme générale rectangulaire centré axialement ; au voisinage de l'extrémité de l'élément rigide 10 proche de la partie plane 9, une zone 19 de la paroi intérieure de l'élément rigide 10 est légèrement en retrait, c'est-à-dire plus proche de l'axe de l'élément rigide 10 que le reste de la paroi intérieure, cette zone 19 s'étendant axialement jusqu'au droit d'un plan transversal 20 ; l'extrémité de l'élément rigide 10 opposée à celle qui porte la partie plane 9 est conformée de manière à coopérer avec la surface extérieure du bouton-poussoir 2 ; dans l'exemple représenté sur les figures, la surface extérieure du bouton-poussoir 2 comprend notamment deux surfaces cylindriques circulaires de même axe raccordées par une surface tronconique ; dès lors, à son extrémité, l'élément rigide 10 présente deux bords cylindriques circulaires 21, 22 raccordés par un bord tronconique 24.

Au droit de la partie plane 9 du fond de l'élément rigide 10, celui-ci comporte deux picots cylindriques 17 axiaux, placés de part et d'autre de l'ouverture 16, et dont le rôle apparaîtra ci-après.

L'embout 4 de fermeture selon l'invention comprend, outre l'élément rigide 10, la pièce élastique 5. La pièce élastique 5 est obtenue en surmoulant partiellement l'élément rigide 10, in situ, dans un deuxième temps, après l'opération de moulage proprement dite de l'élément rigide 10 ; les figures 2 à 4 montrent schématiquement ces diverses opérations : sur la figure 2, dans un premier temps, les deux mâchoires 12 et 13, à empreintes, du moule de la machine de moulage sont fermées et le matériau rigide 40 est injecté dans le moule pour réaliser l'élément rigide 10 ; dans un deuxième temps, comme montré sur la figure 3, les mâchoires 12 et 13 sont écartées l'une de l'autre, selon un jeu 14, libérant ainsi un volume 51 dans lequel est injecté le matériau élastique 50, comme cela est visible sur la figure 4, pour réaliser la pièce élastique 5.

Les figures 2 à 4 étant des vues schématiques illustrant le principe de l'opération de moulage, en se reportant aux figures 9 à 11, qui montrent de manière plus détaillée l'embout 4, on voit que cette opération de moulage a permis non seulement la réalisation de la pièce élastique 5 mais également son montage sur l'élément rigide 10 sur lequel elle est maintenue ; ce maintien est réalisé mécaniquement, les matériaux 40 et 50 étant prévus chimiquement incompatibles ; le matériau 50, en remplissant l'ouverture 16, a réalisé un pion 5B d'ancrage pour la pièce élastique 5 ; le maintien est en outre conforté par les picots 17 entourés au moins partiellement par le matériau 50 ainsi que par le voile 5C tapissant partiellement la surface intérieure supérieure de l'élément rigide 10 ; un tel maintien est en général suffisant ; toutefois, il est possible de le parfaire, en fonction de la nature des matériaux 40 et 50, lors du montage de l'embout 4 sur le bouton-poussoir 2, comme cela est montré sur la figure 5 : sur cette figure, on voit que la sortie tubulaire 33, dans laquelle est ménagé le canal 30 de distribution, a le bord supérieur de son extrémité 31 qui coopère avec la pièce élastique 5, en la comprimant, lorsque l'embout 4 est en place sur la sortie tubulaire 33 ; au contraire, dans le cas de la variante représentée sur la figure 1, la face 6 d'extrémité de la sortie tubulaire 23 est à distance de la pièce élastique 5.

La pièce élastique 5 comprend une lèvre 5A obtenue lors du moulage par remplissage du passage 15 de l'élément rigide 10 ; on notera que ceci présente l'avantage de réaliser une lèvre 5A très ajustée par rapport au contour du passage 15 et, en particulier, par rapport au bord 18 du passage 15 qui constitue le siège de la lèvre 5A : ainsi, le système de fermeture selon l'invention est de haute performance.

L'ensemble de distribution selon l'invention fonctionne comme suit : une action sur le bouton-poussoir 2 ouvre la valve de distribution ; le produit présent dans le canal 3, sous la poussée du fluide propulseur, pousse la lèvre 5A qui, par compression, s'éloigne de son siège 18 et laisse passer le produit ; lorsque l'on cesse l'action sur le bouton-poussoir, la lèvre 5A retrouve sa forme initiale et coopère à nouveau avec son siège 18, empêchant ainsi tout échange entre l'intérieur et l'extérieur de l'embout 4.

Selon la variante représentée partiellement sur la figure 6, la sortie tubulaire 300 de l'ensemble de distribution comprend, d'une part, le canal de distribution 303 et, d'autre part, une gorge annulaire 301, entourant le canal 303 ; l'embout 100 est constitué de l'élément rigide 101 cylindrique en forme de doigt de gant, dont le fond 109 est une partie plane, perpendiculaire à l'axe de l'élément rigide 101, dans laquelle est ménagé le passage 115 ; on reconnaît en 105 la pièce élastique associée à l'élément rigide 101 ; l'élément rigide 101 est inséré, par sa partie cylindrique, dans la gorge annulaire 301, l'élément rigide 101 étant muni d'une collerette d'extrémité qui coopère en butée avec un épaulement 302 transversal de la sortie tubulaire 300 pour le positionnement axial de l'embout 100.

Le mode de réalisation de l'ensemble de distribution 1 décrit, comprend une valve de distribution, le produit étant soumis dans le récipient à la poussée d'un fluide propulseur ; l'invention s'applique à tout ensemble de distribution, quel que soit le mode de propulsion du produit : ainsi, l'ensemble de distribution peut être, par exemple, équipé d'une pompe manuelle.

L'opération de moulage de la tête de distribution (2) est d'une grande simplicité permettant de fabriquer en un seul cycle de moulage la tête de distribution, sans avoir recours aux obturateurs en élastomère nécessitant une phase de réticulation, et donc une étape de montage supplémentaire.

## Revendications

1. Ensemble de distribution (1) comportant un récipient (1A) muni d'un organe de distribution, et une tête de distribution (2) contenant au moins un canal (3, 30) de distribution du produit à distribuer, un système de fermeture étant prévu pour fermer la partie terminale, s'ouvrant sur l'extérieur, du canal de distribution (3, 30), ledit système de fermeture étant formé par un obturateur (5A) qui fait partie d'une pièce en matériau élastiquement déformable (5, 105) et par au moins un siège (15, 115), l'obturateur (5A) étant en contact avec son siège (18, 115) associé lorsqu'il n'y a pas de distribution, s'écartant dudit siège par déformation élastique sous la poussée du produit à distribuer et revenant par élasticité en contact avec ledit siège (18, 115) lorsque cesse la distribution, l'obturateur étant constitué par une lèvre élastique (5A) s'écartant du siège (18, 115) par flexion perpendiculairement à la direction de poussée du produit en réponse à l'actionnement dudit organe de distribution, le siège faisant partie d'un élément en matériau rigide (10), la pièce en matériau élastique (5, 105) étant obtenue par un surmoulage au moins partiel de l'élément en matériau rigide (10), le matériau élastique et le matériau rigide étant chimiquement incompatibles pour éviter des liaisons chimiques entre les deux matériaux lors de l'opération de surmoulage, caractérisé en ce que la tête de distribution est conformée en un bouton-poussoir, apte à actionner ledit organe de distribution.

2. Ensemble de distribution selon la revendication 1, caractérisé en ce que l'organe de distribution est une valve de distribution ou une pompe manuelle.

3. Ensemble de distribution selon la revendication 1 ou 2, caractérisé en ce que l'élément rigide (10) est en forme de doigt de gant et son fond présente un passage (15) dont le volume est occupé par le matériau élastique réalisant ainsi, dans le passage (15), une lèvre élastique (5A) qui coopère avec un siège constitué par un bord (18) du passage (15).

4. Ensemble de distribution selon l'une quelconque des revendications 1 à 3, caractérisé en ce que l'élément rigide (10) comporte un organe d'accrochage (17) surmoulé, au moins partiellement, par la pièce élastique (5).

5. Ensemble de distribution selon la revendication 3 ou 4, caractérisé par le fait que l'élément rigide (10) est cylindrique, à section circulaire, et son fond est de forme ogivale se terminant selon une partie plane (9), le passage (15) étant ménagé dans la partie plane (9).

6. Ensemble de distribution selon l'une quelconque des revendications 3 à 5, caractérisé par le fait que le passage (15) est de forme générale rectangulaire et placé au voisinage de l'axe de l'élément rigide (10).

7. Ensemble de distribution l'une quelconque des revendications 1 à 6, caractérisé par le fait que le fond de l'élément rigide (10) présente une ouverture (16) dont le volume est occupé par le matériau élastique réalisant ainsi, dans l'ouverture (16), un pion d'ancrage pour la pièce élastique (5).

8. Ensemble de distribution selon la revendication 7, caractérisé par le fait que l'ouverture (16) est circulaire et placée au-dessus de l'axe de l'élément rigide (10), dans la partie plane (9).

9. Ensemble de distribution selon l'une quelconque des revendications 3 à 8, caractérisé par le fait que le siège est constitué par le bord (18) du passage (15) le plus éloigné de l'ouverture (16).

10. Ensemble de distribution selon l'une quelconque des revendications 5 à 9, caractérisé par le fait que la partie plane (9) de l'élément rigide (10) est inclinée sur l'axe de l'élément rigide (10).

11. Ensemble de distribution selon l'une quelconque des revendications précédentes, caractérisé en ce que le canal de distribution (3, 30) est ménagé dans une sortie tubulaire (23) qui est emmanchée dans l'embout de fermeture (4).

12. Ensemble de distribution selon l'une quelconque des revendications précédentes, caractérisé en ce que le canal de distribution (303) est ménagé dans une sortie tubulaire (300) comportant une gorge annulaire (301), entourant le canal de distribution (303) et dans laquelle est inséré l'embout (100).

13. Ensemble de distribution selon l'une quelconque des revendications précédentes, caractérisé en ce que le matériau élastique a une dureté comprise dans la gamme allant de 40 Shore A à 50 Shore D

14. Ensemble de distribution selon l'une quelconque des revendications précédentes, caractérisé en ce que le matériau élastique à une dureté allant de 50 Shore A à 90 Shore A.

15. Ensemble de distribution selon l'une des revendications précédentes, caractérisé en ce que la pièce (5, 105) en matériau élastique est moulée en un matériau choisi parmi les polyéthylènes de basse densité, l'éthylène vinyl acétate, le polychlorure de vinyle, les terpolymères de bloc de polypropylène avec des motifs styrène/éthylène - butène/styrène, et les polyuréthanes thermoplastiques.

16. Ensemble de distribution selon l'une des revendications précédentes, caractérisé en ce que l'élément en matériau rigide (10) est moulé en un matériau choisi parmi les polyéthylènes de haute densité et les polypropylènes.
